# EUROPEAN PATENT APPLICATION

(11) **EP 1 168 227 A1**
(43) Date of publication of application: **02.01.2002**
(21) Application number: 01114747.7
(22) Date of filing: 22.06.2001
(51) Int. Cl.: G06K 7/00

(54) **Chip card reading and/or writing device**

(30) Priority: 29.06.2000 FR 0008564
(71) Applicant: F.C.I. - Framatome Connectors International, 92400 Courbevoie (FR)
(72) Inventor: Pernet, Michel, 25300 Doubs (FR); Cabane, Francis, 39100 Dole (FR)
(74) Representative: Beetz & Partner Patentanwälte

(57) **Abstract**

The invention relates to a chip card reading and / or writing device (13), with a contact component (1), which carries at least one contact (2) for the making of contact of the chip card (13). Also provided is a printed circuit board (7), which is connected to the contact component (1), a support component (4), which possesses supplementary means of sliding (6), arranged on the contact component (1) in such a way that the contact component (1) is detachable within the device, resulting in a precise positioning of the contact component with respect to the chip card.

## Description

The invention relates to a chip card reading and / or writing device, comprising a contact component provided with contacts for making contact with the chip card when it is inserted into the device. Also provided is a printed circuit board connected to the contact component. The present invention applies, in particular, to distributors or automatic teller machines and to public telephones, but it is not limited to these fields of application. It can be used anywhere where cards equipped with an integrated chip are used, whether for making payments, for access to protected systems such as networks, or for any other application.

When the chip card is introduced into the device, the contacts carried by the contact component rub and come into contact with the surfaces of the electronic chip contact, which are arranged on or in the card. Here, an important criterion is the resistance of the electrical contact between the contact of the contact component and the contact surface of the chip card. Even in the case of very frequent use of the reading device, it is important that the said electrical resistance should not rise too greatly by reason of wear on the contacts. The device must be able to make possible some 500 000 reading cycles, without the resistance of the contact greatly rising. For example, during the life of the chip card reading device, the resistance of the contact should be less than 100 mΩ in order to ensure functioning of the reading device which is free from defects.

In conventional chip card reading and / or writing devices, the contact component equipped with contacts is firmly fixed in a casing. If the contact component has to be replaced by reason of having sustained damage, as, for example, when the contacts enabling the chip card to make contact have become bent or destroyed, it is normally necessary to remove the whole card reading device from its casing to carry out a repair, this being a procedure which is both complicated and costly.

The contact component is, moreover, usually fixed to a printed circuit board (or vice-versa) which is, in turn arranged on the support components belonging to the casing of the device. Each measurement of these fixing components is laid down with a certain degree of tolerance and since such tolerances accumulate, the ultimate precision of the relevant layout with respect to the contact surfaces of the chip card accordingly becomes less in proportion to the rise in the number of components.

An important characteristic of a contact component with a long working life resides in the spacing of the contacts of the contact component with respect to the contact surfaces of the chip card. It would therefore be desirable to have exact positioning of the contacts of the contact element.

US-A-5 527 192 specification describes a chip card reading / writing device with the contacts which are carried by the contact component having spoon-shaped contact surfaces which indirectly makes possible an increase in the working life of the contacts, by reason of the fact that the contacts cannot be vandalised.

The problem posed by the present invention is that of making available a device which makes it possible to read and / or write a chip card which can easily be "debugged", the contact component being able to be replaced easily in the case of a defect and where the tolerances of the position of the contacts with respect to the contact surface of the chip card are significantly reduced.

This problem is solved by the fact that in order to provide guidance for the contact component, a support component is incorporated which provides a means of sliding to act in concert with the supplementary means of sliding arranged on the contact component in such a way that the contact component is easily withdrawn from the device.

In this way it is ensured that in the case of a defective contact component, its replacement is a simple operation because it is possible to withdraw said contact component from the means of sliding and if necessary, to replace it without any lengthy and complicated operations and hence without any need for de-welding, unscrewing and the like.

The support component is preferably made from an insulating material, the means of sliding being slides on which the contact component is arranged so that it can be moved, thanks to the shoulders which have been formed thereon. In this way, a high degree of precision of the layout with respect to the contacts of the contact component is ensured, since the support component can be moulded with a very high degree of precision from a plastic material. The support component can be arranged either directly on the printed circuit board, or on the casing of the device. Another possibility is that of making the support component integral with the casing. Because the contact component with the contacts is arranged so that it can be moved with respect to the printed circuit board, the contact component is, in one preferred embodiment, able to be connected to the printed circuit board by means of a flexible printed circuit or by that of a flat cable which makes it possible to make it independent of the position of the printed circuit board. The contact component can, however, also be connected to the printed circuit board by means of contact tracks which are arranged under the contact component when the latter rests on the printed circuit board.

In this way, thanks to the contact component being fixed to the support component, it is possible to achieve a spatial separation between the contact component and the printed circuit board.

It is, however, also possible to arrange slides on the contact component, which act in concert with the shoulders formed on the support component.

The contact component can, moreover, have a sensor which detects the end of run of the chip card, indicating the moment at which the card was completely and correctly inserted in the device. This sensor can, however, also be independent of the contact component.

In order the better to explain the invention, preferred embodiments of the said invention are described below with reference to the appended diagrammatic drawings.
Fig. 1a and 1b show schematically the chip card reading and / or writing device in an assembled condition and in an exploded condition respectively,
Fig. 2a and 2b show a second embodiment of the invention in an assembled condition and in an exploded condition respectively and
Fig. 3a and 3b show a third embodiment of the invention, in an assembled and in an exploded condition respectively.

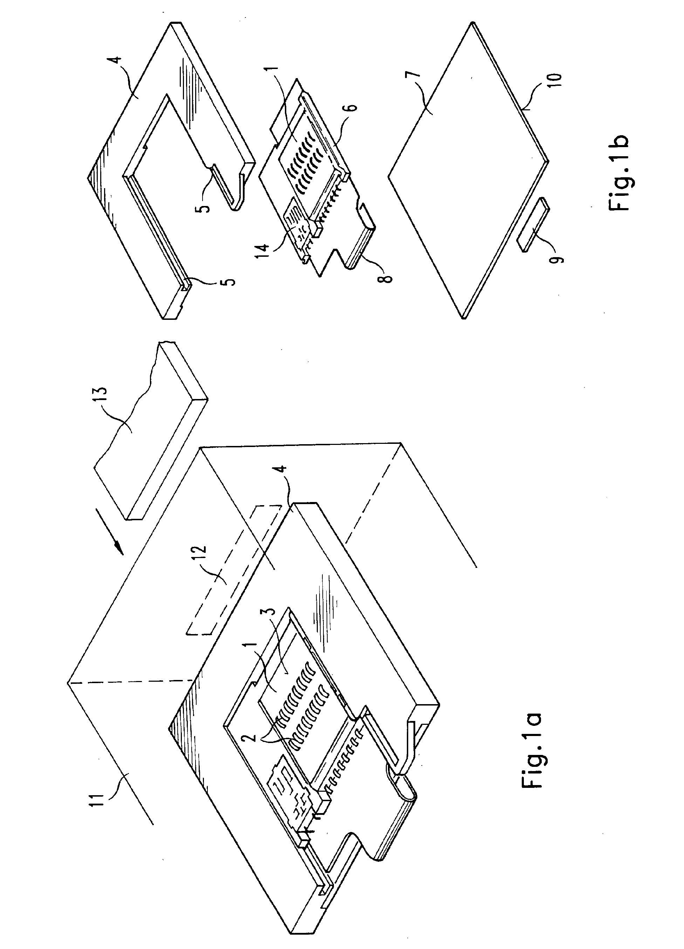

The chip card reading and / or writing device according to the invention, is shown in Fig. 1a and 1b. It has a contact component 1 carrying several contacts 2, which protrude from the surface 3 of the contact component 1. The contact component 1 is held by a support component 4. The support component 4 is U-shaped and has on its interior walls two means of sliding 5 which lie parallel to one another. The contact component 1 has on its side edges, lateral supplementary means of sliding 6, which, in the present embodiment, are incorporated laterally in the form of shoulders, in the contact component 1. For that reason, the contact component 1 can be inserted and withdrawn by being slid into or out of the support component.

The support component 4 supports a printed circuit board 7. It can also form part of the reader frame. In order to provide electrical connection of contacts 2 with the conducting tracks of the printed circuit board 7, the contact component 1 is connected by means of a flexible printed circuit or a flat cable 8 whose length is such that when the flat cable 8 is fixed to the lower face 10 of the printed circuit board 7 by means of a card connector for the flat cable to be assembled to the surface 9, there is enough length for the contact component to be withdrawn from the support component 4. The device is enclosed in, or forms part of, the casing 11 which has on its front face an opening 12, destined for the introduction of a chip card 13. On the lower face of the chip card 13 is arranged (not shown) a chip equipped with conducting tracks, which come into contact with the contacts 2 when the card 13 has been introduced into the opening 12.

The casing 11 with its opening 12 and the chip card 13 are only shown diagrammatically, the proportions between the chip card and the contact component carrying the contacts are not shown exactly to scale. The contact component 1 can also comprise a sensor 14 which emits a signal when the chip card 13 is in its end-position following its correct introduction.

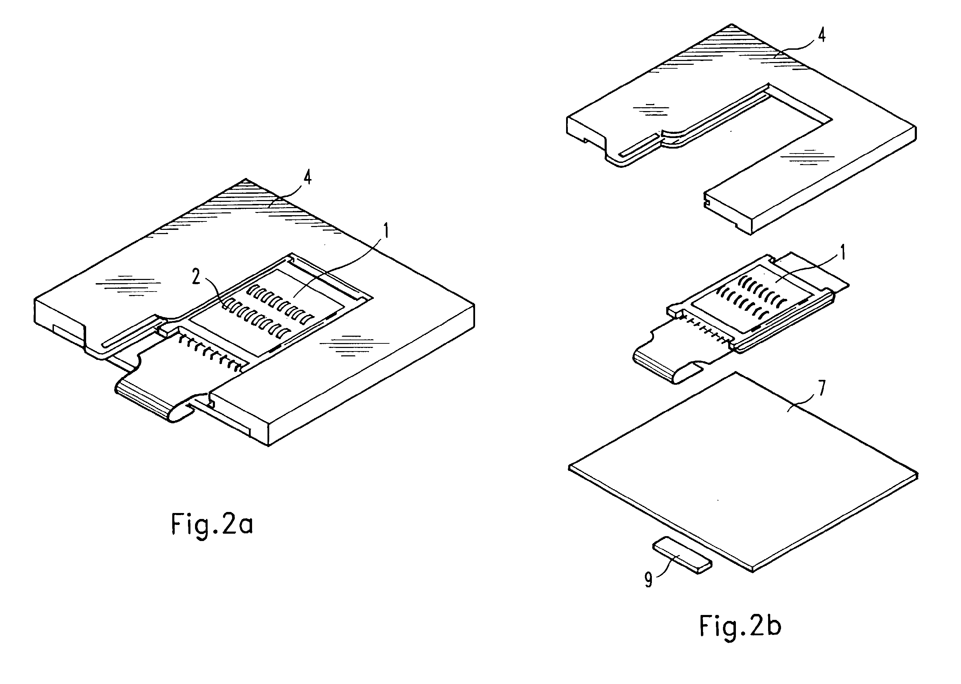

The embodiment of the device according to the invention which is shown in Fig. 2, corresponds to the device in Fig. 1, but without the sensor 14 which makes it possible to detect the end of run of the chip card.

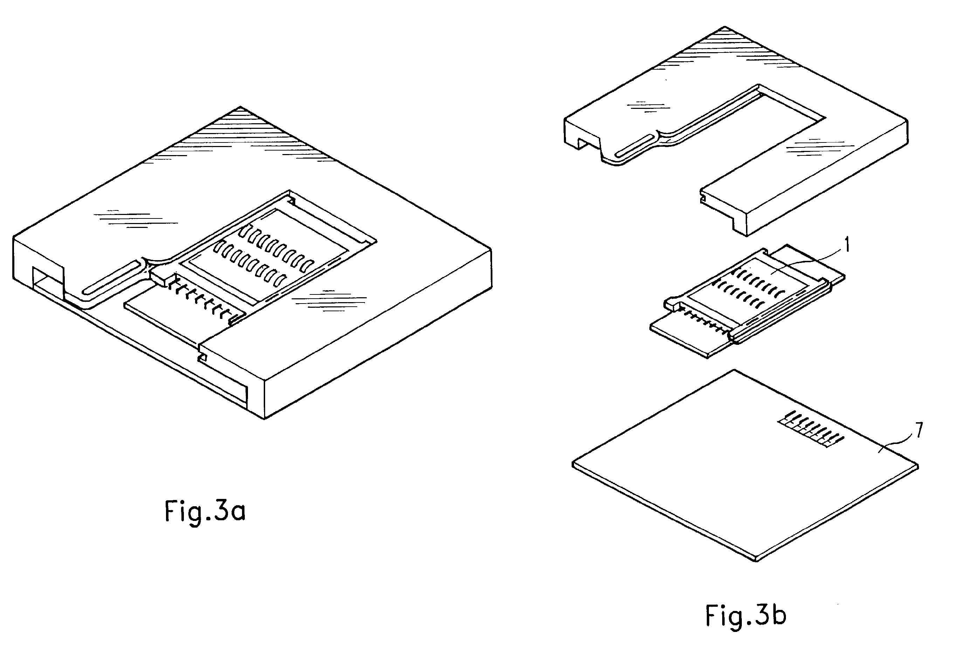

Fig. 3a and 3b show a third embodiment ; in this embodiment, the contact component 1 is not connected to the printed circuit board 7 by means of a flat cable as before. The contact component in this embodiment variant is soldered directly to the printed circuit board 7, contact being made by means of tracks arranged on the printed circuit card.

In the embodiments shown, the means of sliding 5 are always arranged in the support component 4, the latter being connected to the printed circuit board 7. The support component 4 can, however, also be fixed directly to the housing 11 of the device.

In all cases, thanks to the reading and / or writing device according to the invention, the contact component 1 may be replaced quickly and easily if the said component has become defective as a result of repeated use and also, by reason of its compactness, it has a low height. Moreover, thanks to the layout according to the invention, a very precise positioning of the contacts 2 with respect to the chip card 13 is achieved; indeed, the means of sliding can be implemented by means of plastic moulding with a very high degree of precision. By means of this process, a chip card reading and / or writing device is obtained, which is simple and cheap to maintain, because the contact component can be replaced easily and individually. Moreover, the precision of positioning of the contacts with respect to the card ensures a low degree of wear of the contacts, which, in turn, makes for a long life of the device according to the invention.

Lastly, in the case of use of a component which detects the end of run of the chip card, the latter is preferably integrated into the contact component 1 and its position with respect to the anti-vandalising spoons of the contacts of the chip card reader is also very precisely provided, regardless of the number of maintenance operations. These operations make it possible to deal with any breakdowns of these two functions.

## Claims

1. A chip card reading and / or writing device 13 comprising
- a contact component (1) which has at least one contact (2) to make contact with the chip card (13),
- a printed circuit board (7) connected to contact component (1), **characterised by** the fact that in order to provide guidance to the contact component (1), a support component (4) has means of sliding (5) which act in concert with complementary means of sliding (6) arranged on the contact component (1) in such a way that the contact component (1) is able to be easily withdrawn from the device.

2. A device according to Claim 1, **characterised by** the fact that the support component (4) supports the printed circuit board (7).

3. A device according to Claim 1, **characterised by** the fact that the contact component (1) is connected to the printed circuit board (7) by means of a flexible printed circuit or a flat cable (8)

4. A device according to Claims 1 or 2, **characterised by** the fact that the contact component (1) is connected to the printed circuit board (7) by means of conducting tracks

5. A device according to any of the preceding Claims, **characterised by** the fact that the means of sliding (5) are slides on which the contact component (1) is arranged in a movable manner, thanks to the shoulders formed on the latter.

6. A device according to any of the preceding Claims, **characterised by** the fact that the support component (4) is arranged on the casing (11) of the device.

7. A chip card reading and / or writing device according to any of the preceding Claims, **characterised by** the fact that the support component (4) is integrated into the housing (11)

8. A chip card reading and / or writing device according to any of the preceding Claims, **characterised by** the fact that the contact component (1) is fitted with a means of locking and unlocking in position.

9. A chip card reading and / or writing device according to any of the preceding Claims, **characterised by** the fact that the contact component (1) has a sensor (14) which detects the end of run of the chip card.
